Europäisches Patentamt

European Patent Office

Office européen des brevets

(19)

(11) Numéro de publication: **0 176 945**
**B1**

(12) # FASCICULE DE BREVET EUROPÉEN

(45) Date de publication du fascicule du brevet:
31.05.89

(51) Int. Cl.⁴: **B 29 D 30/56,** B 29 C 35/02,
B 29 C 43/22

(21) Numéro de dépôt: **85112145.9**

(22) Date de dépôt: **25.09.85**

(54) **Bande de roulement prévulcanisée pour le rechapage des enveloppes de pneumatiques; procédé et appareil pour produire une telle bande de roulement.**

(30) Priorité: **04.10.84 FR 8415362**

(43) Date de publication de la demande:
**09.04.86 Bulletin 86/15**

(45) Mention de la délivrance du brevet:
**31.05.89 Bulletin 89/22**

(84) Etats contractants désignés:
**AT BE CH DE FR GB IT LI LU NL SE**

(56) Documents cité:
**DE-B-1 232 845**
**FR-A-1 136 864**
**FR-A-1 224 704**
**FR-A-2 544 252**
**US-A-2 181 859**
**US-A-4 003 686**

(73) Titulaire: **MICHELIN & CIE (Compagnie Générale des Etablissements Michelin) Société dite:, 4 rue du Terrail, F-63000 Clermont- Ferrand (FR)**

(72) Inventeur: **Remond, Michel, Berzet St- Genès-Champanelle, F-63122 Ceyrat (FR)**

(74) Mandataire: **Renaudie, Jacques, Michelin & Cie Service K. Brevets, F-63040 Clermont- Ferrand Cédex (FR)**

LIBER, STOCKHOLM 1989

## Description

L'invention concerne les bandes de roulement prévulcanisées utilisées notamment en rechapage des pneumatiques. Elle se rapporte également à un procédé de fabrication de telles bandes du type enoncé dans le preambule de la revendication 5 (version A) et 6 (version B), ainsi qu'à un appareil capable de produire de telles bandes en continu du type enoncé dans le preambule de la revendication 6 (version A) et 7 (version B).

Un procédé et un appareil du type ci-dessus sont décrits dans le document US-A-4 003 686.

Lorsque l'on utilise des bandes de roulement prévulcanisées pour rechaper des enveloppes de pneumatiques, ce sont soit des bandes de roulement préparées en bandes plates de grande longueur, soit des bandes de roulement préparées sous forme d'anneaux. Les bandes plates présentent, par définition, un rayon de courbure infini dans le sens longitudinal. En général, elles sont dépourvues d'ailes venant recouvrir les flancs des enveloppes rechapées, ou sont pourvues d'ailes très petites. Ce procédé s'appelle rechapage "top-cap" parce qu'il n'intéresse que le sommet de l'enveloppe.

Il est bien connu que lorsqu'on utilise une bande de roulement plate sans aile ou avec des ailes très petites pour rechaper des enveloppes de pneumatiques, les parties latérales de la bande de roulememt sont le siège de contraintes importantes; il faut exercer de grandes pressions sur ces zones latérales afin de bien les appliquer sur la carcasse de l'enveloppe. Avec cette méthode, il est pratiquement impossible d'obtenir des enveloppes rechapées ayant l'aspect d'enveloppes neuves. De plus, on constate fréquemment des amorces de décollage dans les zones latérales. La demande de brevet DE-OS-2 642 990 montre un exemple de bande de roulememt préparée en grande longueur.

Lorsque la bande de roulement est préparée sous forme d'anneau, elle comporte en général un rayon de courbure dans le sens transversal pour bien épouser le sommet de l'enveloppe, et des ailes venant s'appliquer assez bas sur l'épaule, ce qui permet d'obtenir des enveloppes rechapées sans irrégularité ou défaut d'aspect. Ce procédé est usuellement désigné par rechapage "full cap". Le brevet US-3 815 651 montre un exemple de bande de roulement préparée en anneau.

L'inconvénient majeur du rechapage effectué à l'aide d'une bande de roulement préparée en anneau est qu'il faut utiliser pour chaque dimension de pneumatique à rechaper un anneau correspondant à la carcasse à rechaper. Il est donc nécessaire d'avoir un stock important de bandes de roulememt en anneaux de dimensions différentes.

L'objectif de la présents invention est d'ameliorer le procédé et l'appareil connus décrits dans le document US-A-4 003 686 ci-dessus mentionné, de façon à réaliser des bandes de roulement prévulcanisées qui présentent les avantages combinés des bandes de roulement préparées à plat, en grande longueur, et des bandes de roulement préparées en anneaux, sans avoir les inconvénients inhérents à chacune des deux espèces.

Il s'agit donc de produire une bande de roulement prévulcanisée qui soit pourvue, à l'état libre de toutes contraintes, d'un rayon de courbure constant dans le sens longitudinal, qui puisse présenter en outre un ou plusieurs rayons de courbure dans le sens transversal, afin de s'adapter correctement à la carcasse sur laquelle elle doit être collée, et qui puisse être produite en très grande longueur, de manière à pouvoir être utilisée sur une carcasse de n'importe quel diamètre à la manière des bandes préparées à plat.

La bande de roulement selon l'invention présente à l'état libre, dans le sens longitudinal, une courbure dont le rayon correspond sensiblement à celui des enveloppes à rechaper, la semelle de ladite bande de roulement étant concave, et est remarquable en ce qu'elle présente deux extrémités dans le sens longitudinal.

On entend par là qu'elle n'est pas produite en anneau. Elle peut être produite en grande longueur, ce qui signifie une longueur au moins égale à la longueur de la circonférence de l'enveloppe de plus grand développement à rechaper. Ainsi, la bande de roulement conforme à l'invention convient pour les enveloppes de tous diamètres. Pour limiter la quantité de chutes, la longueur est de préférence égale à plusieurs fois la longueur minimale définie ci-dessus, par exemple de 4 à 10 fois. La bande de roulement est coupée à la dimension voulue au moment de son utilisation, comme on le fait usuellement avec les bandes de roulement préparées à plat.

Conformément à l'invention, le procédé continu de fabrication de bandes de roulement prévulcanisées, par moulage de caoutchouc cru entre des premiers moyens de moulage de la semelle de ladite bande de roulement et des seconds moyens de moulage de la sculpture de ladite bande de roulement, lesdits moyens délimitant, en position de fermeture, au moins partiellement, les premiers une première surface quasi cylindrique, les seconds une seconde surface quasi cylindrique coaxiale située radialement à l'extérieur de la première,

- du caoutchouc cru étant introduit entre lesdits premiers moyens et lesdits seconds moyens,

- lesdits premiers et seconds moyens étant amenés en position de fermeture par rapprochement relatif, position dans laquelle le caoutchouc reçoit un flux calorifique destiné à en assurer la vulcanisation,

- lesdits premiers et seconds moyens étant amenés en position d'ouverture de sorte que l'on puisse extraire la bande de roulement, est caractérisé en ce que

- les premiers et les seconds moyens sont, en position de fermeture, immobiles l'un par rapport à l'autre, et animés d'un mouvement de rotation autour de l'axe desdites surfaces.

L'appareil conforme à l'invention, destiné à la production de bandes de roulement prévulcanisées, comportant des premiers moyens de moulage de la semelle de ladite bande de roulement et des seconds moyens de moulage de la sculpture de ladite bande de roulement, ainsi que des moyens de chauffage assurant la vulcanisation de ladite bande de roulement, lesdits moyens délimitant, en position de fermeture, au moins partiellement, les premiers une première surface quasi cylindrique, les seconds une seconde surface quasi cylindrique coaxials situés radialement à l'extérieur de la première,

lesdits premiers et seconds moyens délimitant, pendant le moulage et la vulcanisation de ladite bande de roulement, un espace de moulage continu disposé en arc de cercle inférieur à 360°, est caractérisé on ce que

les premiers et les seconds mogens sont, en position de fermeture, immobiles l'un par rapport à l'autre, et animés d'un mouvement continu de rotation autour de l'axe desdites surfaces.

De préférence, lesdits premiers moyens de moulage de la semelle sont constitués par une virole usinée au profil intérieur de la bande de roulement à mouler, et lesdits seconds moyens sont constitués par des segments dont la face radialement intérieure moule la sculpture.

L'ensemble est animé d'un mouvement de rotation dont la vitesse est détermiée par la loi de cuisson de la gomme utilisée. La gomme crue est donc déposée sur ladite virole, est moulée par le rapprochement d'un segment, qui est maintenu fermé pendant un déplacement correspondant à un arc inférieur à 360° de manière à effectuer la vulcanisation, puis ledit segment est éloigné radialement et la bande de roulement vulcanisée est extraite. La production est ainsi réalisée en continu. La longueur de la bande de roulement n'est limitée que par des contraintes de poids et d'encombrement.

Les figures du dessin annexé permettent de bien comprendre comment l'invention peut être mise en oeuvre.

La figure 1 représente une bande de roulement selon l'invention.

Les figures 2 et 3 représentent un appareil de production de bandes de roulement conforme à l'invention.

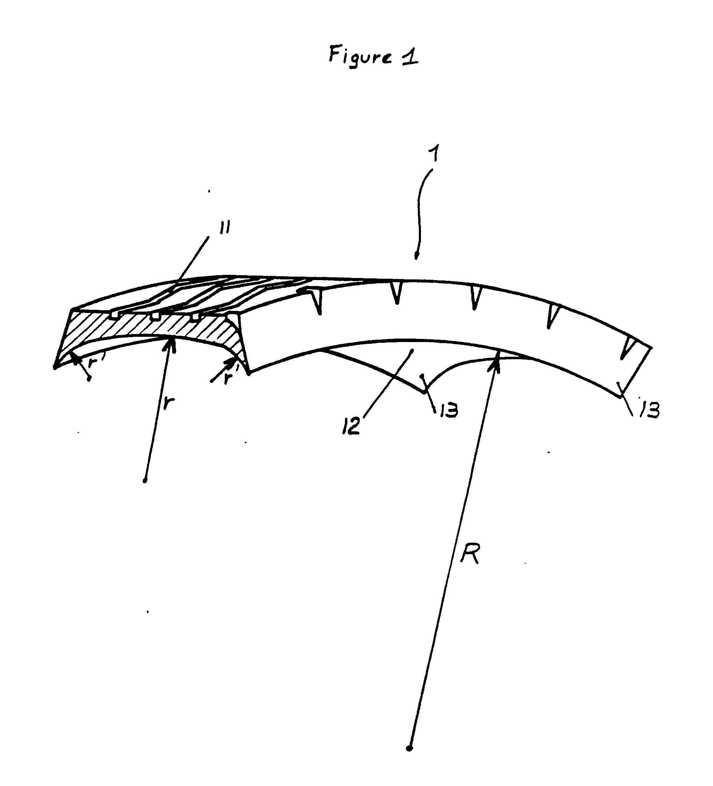

Afin de bien faire apparaître les caractéristiques de la bande de roulement selon l'invention, on ne l'a représentée que partiellement à la figure 1. Elle est désignée en général par la référence 1. On voit la sculpture 11 ou face extérieure de bande de roulement et la semelle 12, c'est-à-dire la face destinée à être collée sur le sommet de l'enveloppe à rechaper. La bande de roulement se caractérise par la combinaison nouvelle de deux caractéristiques: elle a une grande longueur et un rayon de courbure R dans le sens longitudinal. Elle présente avantageusement un rayon de courburer dans le sens transversal pour mieux épouser la forme du sommet de l'enveloppe à rechaper. Dans une variante préférentielle de réalisation, ledit rayon de courbure r est variable: il est maximum au centre et est minimum aux épaulements, comme schématisé à la figure 1 où l'on a désigné par r' le rayon de courbure transversal sous les ailes 13. On réalise ainsi des ailes 13 qui s'appliquent sur la partie supérieure des flancs de l'enveloppe à rechaper. Cette variante est utilisée surtout pour les sculptures agressives qui nécessitent un rechapage "full-cap". Cependant, les variantes de réalisation où r = r' = ∞ entrent également dans le cadre de la préssete invention: c'est le rechapage "top-cap" qui suffit dans beaucoup de cas.

La caractéristique essentielle de l'invention est la combinaison dans le sens longitudinal d'une grande longueur avec un rayon de courbure R à l'état vulcanisé et libre de toute contrainte. Pour le stockage de telles bandes de roulement, on les enroule en spirale en les obligeant à prendre un rayon de courbure inférieur à R au début de la spirale, puis le rayon de courbure augmente progressivement pour dépasser R, le cas échéant. Le stockage se fait très facilement en spirale parce que la bande de roulement s'inscrit toujours spontanément entre deux plans parallèles, distants de la largeur de ladite bande de roulement, que ce soit à l'état libre de toute contrainte, ou dans un état ne comportant pas d'autres contraintes que celles visant à modifier la courbure naturelle dans le sens longitudinal comme expliqué ci-dessus. On remarque ici un autre avantage important des bandes de roulement selon l'invention par rapport aux bandes de roulement préparées à plat: le stockage en spirale se fait à un niveau de contraintes inférieur, d'où une tendance moindre aux craquelures en surface sous tension. Puisqu'elle est coupée à longueur au moment du rechapage, la bande de roulement est multi-dimensions, tout comme la bande de roulement préparée à plat.

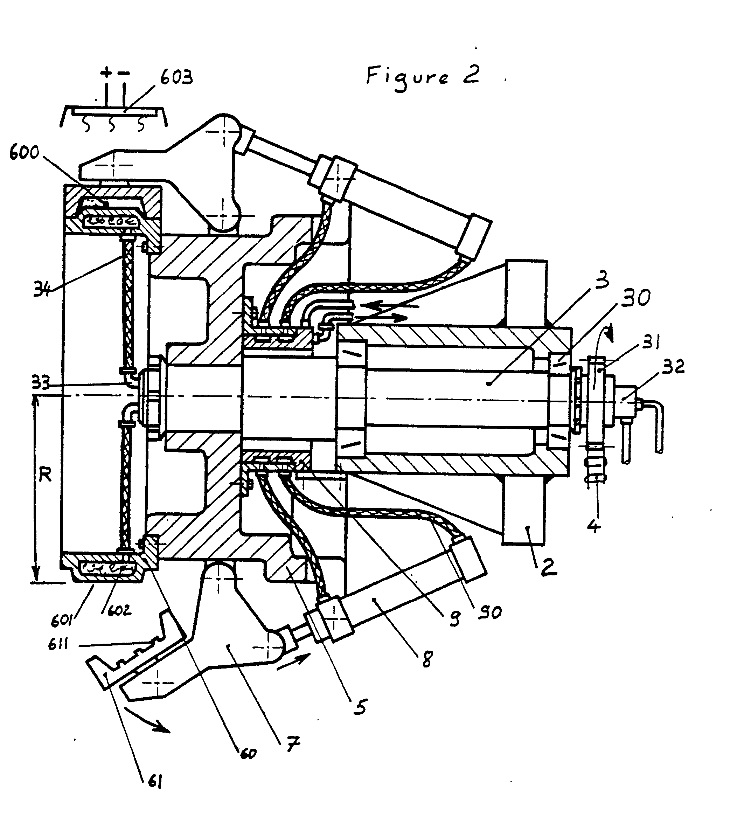

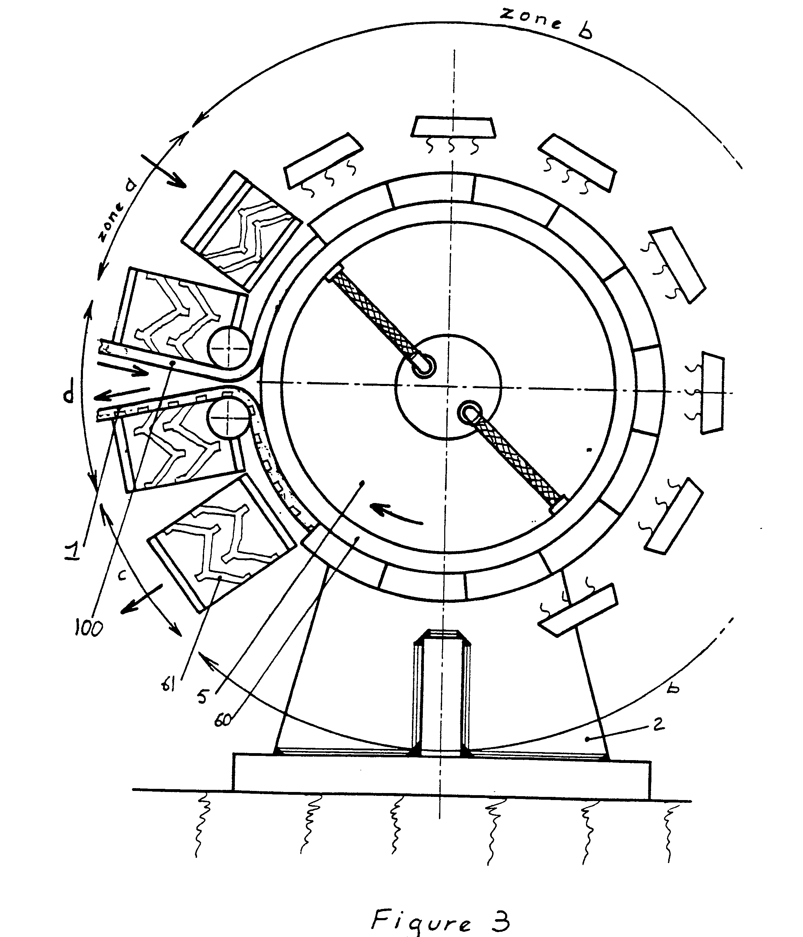

En faisant référence aux figures 2 et 3, on va maintenant décrire le procédé de fabrication de bandes de roulements selon l'invention, ainsi qu'un appareil permettant de produire une bande de roulement selon l'invention.

On voit un bâti 2, un arbre 3 appuyé sur ce bâti 2 par l'intermédiaire de roulements à billes 30 et entraîné en rotation grâce à une chaîne 4 (partiellement représentée) engrénée sur un pignon 31 fixé à une extrémité de l'arbre 3. A l'autre extrémité, l'arbre 3 porte un disque 5 immobile en rotation par rapport à cet arbre 3. Le disque 5 supporte une virole 60 usinée extérieurement au profil 601 de la semelle 12 de la bande de roulement 1 à mouler. Le rayon R de la virole est égal au rayon de courbure R de la bande de roulement à réaliser. A l'intérieur de cette virole 60, on a prévu une cavité 602 de circulation d'un fluide caloporteur pour assurer la vulcanisation de la bande de roulement Ce fluide caloporteur est amené à l'appareil par l'intermédiaire d'un joint tournant 32 fixé à une extrémité de l'arbre 3, il passe dans des conduits 33 aménagés dans cet arbre 3 et des tuyaux 34 rejoignant la cavité 602. Le disque 5 supporte également des bras 7 sur lesquels sont attachés des segments 61, dont la face radialement intérieure 611 moule la sculpture 11 de la bande de roulement 1. L'écartement radial de chaque segment 61 est assuré par un vérin 8. Un distributeur rotatif 9 permet d'alimenter les vérins 8 en fluide de commande sous pression à partir d'une centrale de pression (non représentée) par l'intermédiaire de flexibles 90. Un chauffage des segmente 61 est également prévu, par exemple par des panneaux 603 à infrarouge ou par tout autre système approprié.

Le procédé de fabrication peut être bien compris en consultant principalement la figure 3. En sortie de boudineuse ou de dérouleuse, la gomme crue 100 est déposée sur la virole 60. Sous l'effet de la rotation de l'arbre 3 dans le sens indiqué par la flèche, la gomme crue 100 est appliquée contre la face 601 de la virole 60. La conception du distributeur rotatif 9 permet de rapprocher les segments 61 dans la zone a pour assurer le moulage, de les maintenir fermés pour délimiter un espace 600 continu disposé sur un arc de cercle b inférieur à 360°, puis d'éloigner à nouveau ces segments 61 dans la zone c pour permettre l'extraction de la bande de roulement 1 vulcanisée. L'alimentation en gomme crue 100 et l'extraction de la bande de roulement vulcanisée se font dans la zone d où les segments 61 sont maintenus ouverts. L'arc de cercle correspondant à la zone b est de préférence compris entre 180° et 300°. On voit que le mouvement de rotation de l'arbre 3 peut être continu permettant ainsi une fabrication en continu de bandes de roulement, qui sont coupées à la longueur voulue par tout moyen approprié.

De nombreuses variantes de réalisation de l'appareil peuvent faciment être envisages par l'homme du métier à qui la description qui précède a permis de bien comprendre l'invention. Ainsi, la sculpture 11 peut être moulée par une virole qui porte à sa face intérieure le négatif de la sculpture voulue. Dans ce cas, la semelle est moulée par des éléments qui portent à leur face supérieure le profil voulu, lesdits éléments devant pouvoir s'écarter radialement vers l'intérieur de manière appropriée pour permettre l'introduction de gomme crue et l'extraction de la bande de roulement, et pour délimiter, selon l'invention, un espace de moulage s'étendant sur un arc inférieur à 360°. On peut encore envisager toute autre solution, pourvu que les moyens de moulage puissent délimiter un espace en arc de cercle continu, inférieur à 360°, et puissent s'écarter les une par rapport aux autres pour permettre l'introduction de gomme crue et l'extraction de la bande de roulement vulcanisée.

**Revendications** pour les Etats: DE, GB, IT, NL seulement (version A)

1. Bande de roulement prévulcanisée présentant, à l'état libre de toute contrainte, dans le sens longitudinal, une courbure constante dont le rayon correspond sensiblement à celui des enveloppes sur lesquelles elle doit être fixée, la semelle de ladite bande de roulement étant concave, caractérisé en ce qu'elle présente deux extrémités dans le sens longitudinal et en ce qu'elle s'inscrit spontanément entre deux plans paralléles distants de la largeur de ladite bande de roulement.

2. Bande de roulement selon la revendication 1, caractérisée en ce qu'elle présente une grande longueur dans le sens longitudinal.

3. Bande de roulement selon l'une des revendications 1 ou 2, caractérisée en ce que sa semelle présente une courbure dans le sens transversal.

4. Bande de roulement selon l'une des revendications 1 à 3, caractérisée en ce qu'elle présente des ailes à ses extrémités latérales.

5. Procédé continu de fabrication de bandes de roulement prévulcanisées, par moulage de caoutchouc cru entre des premiers moyens de moulage de la semelle de ladite bande de roulement et des seconds moyens de moulage de la sculpture de ladite bande de roulement, lesdits moyens délimitant, en position de fermeture, au moins partiellement, les premiers une première surface quasi cylindrique, les seconds une seconde surface quasi cylindrique coaxiale située radialement à l'extérieur de la première, du caoutchouc cru étant introduit entre lesdits premiers moyens et lesdits seconds moyens, lesdits premiers et seconds moyens étant amenés en position de fermeture par rapprochement relatif, position dans laquelle le caoutchouc reçoit un flux calorifique destiné à en assurer la vulcanisation, lesdits premiers et seconds moyens étant amenés en position d'ouverture de sorte que l'on puisse extraire la bande de roulement, caractérisé en ce que les premiers et les seconds moyens sont, en position de fermeture, immobiles l'un par rapport à l'autre, et animés d'un mouvement de rotation autour de l'axe desdites surfaces.

6. Appareil de moulage et de vulcanisation de bandes de roulements, comportant des premiers moyens de moulage de la semelle de ladite bande de roulement et des seconds moyens de moulage de la sculpture de ladite bande de roulement, ainsi que des moyens de chauffage assurant la vulcanisation de ladite bande de roulement, lesdits moyens délimitant, en position de fermeture, au moins partiellement, les premiers une première surface quasi cylindrique, les seconds une seconde surface quasi cylindrique coaxiale située radialement à l'extérieur de la première, lesdits premiers et seconds moyens délimitant, pendant le moulage et la vulcanisation de ladite bande de roulement, un espace de moulage continu disposé en arc de cercle strictement inférieur à 360°, caractérisé en ce que les premiers et les seconds moyens sont, en position de fermeture, immobiles l'un par rapport à l'autre, et animés d'un mouvement continu de rotation autour de l'axe desdites surfaces.

7. Appareil selon la revendication 6, caractérisé en ce que lesdits premiers moyens sont constitués par une virole usinée extérieurement au profil de ladite semelle et en ce que lesdits seconds moyens sont constitués par des segments dont la face radialement intérieure moule la sculpture.

8. Appareil selon l'une des revendications 6 à 7, caractérisé en ce que ledit espace de moulage s'étend sur un arc de cercle compris entre 180° et 300°.

**Revendications** pour les Etats: AT, BE, CH, FR, LI, LU, SE seulement (version B)

1. Bande de roulement prévulcanisée présentant, à l'état libre de toute contrainte, dans le sens longitudinal, une courbure constante dont le rayon correspond sensiblement à celui des enveloppes sur lesquelles elle doit être fixée, la semelle de ladite bande de roulement étant concave, caractérisé en ce qu'elle présente deux extrémités dans le sens longitudinal.

2. Bande de roulement selon la revendication 1, caractérisé en ce qu'elle s'inscrit spontanément entre deux plans parallèles distants de la largeur de ladite bande de roulement.

3. Bande de roulement selon l'une des revendications 1 ou 2, caractérisée en ce qu'elle présente une grande longueur dans le sens longitudinal.

4. Bande de roulement selon l'une des revendications 1 à 3, caractérisée en ce que sa semelle présente une courbure dans le sens transversal.

5. Bande de roulement selon l'une des revendications 1 à 3, caractérisée en ce qu'elle présente des ailes à ses extrémités latérales.

6. Procédé continu de fabrication de bandes de rouleme prévulcanisées, par moulage de caoutchouc cru entre des premiers moyens de moulage de la semelle de ladite bande de roulement et des seconds moyens de moulage de la sculpture de ladite bande de roulement, lesdits moyens délimitant, en position de fermeture, au moins partiellement, les premiers une première surface quasi cylindrique, les seconds une seconde surface quasi cylindrique coaxiale située radialement à l'extérieur de la première, du caoutchouc cru étant introduit entre lesdits premiers moyens et lesdits seconds moyens, lesdits premiers et seconds moyens étant amenés en position de fermeture par rapprochement relatif, position dans laquelle le caoutchouc reçoit un flux calorifique destiné à en assurer la vulcanisation, lesdits premiers et seconds moyens étant amenés en position d'ouverture de sorte que l'on puisse extraire la bande de roulement, caractérisé en ce que les premiers et les seconds moyens sont, en position de fermeture, immobiles l'un par rapport à l'autre, et animés d'un mouvement de rotation autour de l'axe desdites surfaces.

7. Appareil de moulage et de vulcanisation de bandes de roulements, comportant des premiers moyens de moulage de la semelle de ladite bande de roulement et des seconds moyens de moulage de la sculputre de ladite bande de roulement, ainsi que des moyens de chauffage assurant la vulcanisation de ladite bande de roulement, lesdits moyens délimitant, en position de fermeture, au moins partiellement, les premiers une première surface quasi cylindrique, les seconds une seconde surface quasi cylindrique coaxiale située radialement à l'extérieur de la première, lesdits premiers et seconds moyens délimitant, pendant le moulage et la vulcanisation de ladite bande de roulement, un espace de moulage continu disposé en arc de cercle strictement inférieur à 360°, caractérisé en ce que les premiers et les seconds moyens sont, en position de fermeture, immobiles l'un par rapport à l'autre, et animés d'un mouvement continu de rotation autour de l'axe desdites surfaces.

8. Appareil selon la revendication 7, caractérisé en ce que lesdits premiers moyens sont constitués par une virole usinée extérieurement au profil de ladite semelle et en ce que lesdits seconds moyens sont constitués par des segments dont la face radialement intérieure moule la sculpture.

9. Appareil selon l'une des revendications 7 à 8, caractérisé en ce que ledit espace de moulage s'étend sur un arc de cercle compris entre 180° et 300°.

**Patentansprüche** für die Vertragslanden: DE, GB, IT, NL (Version A)

1. Vorvulkanisierte Lauffläche, die in von allen Belastungen freiem Zustand in Längsrichtung eine konstante Krümmung aufweist, deren Radius im wesentlichen dem Radius der Reifen entspricht, auf denen sie angebracht werden soll, wobei die Sohle der Lauffläche konkav ist, dadurch gekennzeichnet, daß sie in Längsrichtung zwei Enden aufweist, und daß sie sich spontan zwischen zwei parallelen Ebenen einschreibt, die voneinander um die Breite der Lauffläche entfernt sind.

2. Lauffläche nach Ansprüch 1, dadurch gekennzeichnet, daß sie in Längsrichtung eine große Länge aufweist.

3. Lauffläche nach einem der Ansprüche 1 oder 2, dadurch gekennzeichnet, daß die Sohle in Querrichtung gekrümmt ist.

4. Lauffläche nach einem der Ansprüche 1 bis 3, dadurch gekennzeichnet, daß sie an ihren seitlichen Enden Flügel aufweist.

5. Verfahren zur Herstellung einer vorvulkanisierten Lauffläche durch Gießen von Rohkautschuk zwischen ersten Formmitteln für die Sohle der Lauffläche und zweiten Formmitteln für das Profil der Lauffläche, wobei in geschlossener Lage die ersten Formmittel zumindest teilweise eine erste quasizylindrische Oberfläche und die zweiten Formmittel eine zweite quasizylindrische Oberfläche radial außerhalb der ersten begrenzen, wobei der Rohkautschuk zwischen die ersten und zweiten Formmittel eingebracht wird und diese Formmittel durch Annähern zueinander in eine geschlossene Lage gebracht werden, in der der Kautschuk einem Wärmestrom ausgesetzt wird, um die Vulkanisation zu bewirken, wobei weiters die ersten und zweiten Formmittel in die Offenlage gebracht werden, damit man die Lauffläche entnehmen kann, dadurch gekennzeichnet, daß die ersten und zweiten Formmittel in der Geschlossenlage zueinander unbeweglich sind und um die Achse der Oberflächen eine Rotation ausführen.

6. Vulkanisiervorrichtung für Laufflächen mit einem ersten Formmittel für die Sohle der Lauffläche und zweiten Formmittel für das Profil der Lauffläche, sowie mit Heizmitteln, die die Vulkanisation der Lauffläche bewirken, wobei in ihrer geschlossenen Lage die ersten Formmittel zumindest teilweise eine erste quasizylindrische Oberfläche bilden und die zweiten Formmittel zumindest teilweise eine zweite quasizylindrische Oberfläche koaxial und radial außerhalb der ersten Oberfläche bilden, wobei die beiden Formmittel während des Formens und vulkanisierens der Lauffläche zwischen sich eine kreisringförmige kontinuierliche Form mit einer Länge, die kleiner ist als 360°, begrenzen, dadurch gekennzeichnet, daß die ersten und zweiten Formmittel in der Geschlossenlage zueinander unbeweglich sind und eine kontinuierliche Drehbewegung um die Achse der Oberflächen durchführen.

7. Vorrichtung nach Anspruch 6, dadurch gekennzeichnet, daß die ersten Formmittel aus einem Ring bestehen, dessen äußere Oberfläche der inneren Oberfläche der Sohle entspricht und daß die zweiten Formmittel aus Segmenten bestehen, deren radial innere Oberflächen das Profil formen.

8. Vorrichtung nach einem der Ansprüche 6 oder 7, dadurch gekennzeichnet, daß sich der Formraum über einen Kreisbogen zwischen 180° und 300° erstreckt.

**Patentansprüche** für die Vertragslanden:
AT, BE, CH, FR, LI, LU, BE (Version B)

1. Vorvulkanisierte Lauffläche, die in von allen Belastungen freiem Zustand in Längsrichtung eine konstante Krümmung aufweist, deren Radius im wesentlichen dem Radius der Reifen entspricht, auf denen sie angebracht werden soll, wobei die Sohle der Lauffläche konkav ist, dadurch gekennzeichnet, daß sie in Längsrichtung zwei Enden aufweist.

2. Lauffläche nach Anspruch 1, dadurch gekennzeichnet, daß sie sich spontan zwischen zwei parallelen Ebenen einschreibt, die voneinander um die Breite der Lauffläche entfernt sind.

3. Lauffläche nach einem der Ansprüche 1 oder 2, dadurch gekennzeichnet, daß sie in Längsrichtung eine große Länge aufweist.

4. Lauffläche nach einem der Ansprüche 1 bis 3, dadurch gekennzeichnet, daß die Sohle in Querrichtung gekrümmt ist.

5. Lauffläche nach einem der Ansprüche 1 bis 3, dadurch gekennzeichnet, daß sie an ihren seitlichen Enden Flügel aufweist.

6. Verfahren zur Herstellung einer vorvulkanisierten Lauffläche durch Gießen von Rohkautschuk zwischen ersten Formmitteln für die Sohle der Lauffläche und zweiten Formmitteln für das Profil der Lauffläche, wobei in geschlossener Lage die ersten Formmittel zumindest teilweise eine erste quasizylindrische Oberfläche und die zweiten Formmittel eine zweite quasizylindrische Oberfläche radialaußerhalb der ersten begrenzen, wobei der Rohkautschuk zwischen die ersten und zweiten Formmittel eingebracht wird und diese Formmittel durch Annähern zueinander in eine geschlossene Lage gebracht werden, in der der Kautschuk einem Wärmestrom ausgesetzt wird, um die Vulkanisation zu bewirken, wobei weiters die ersten und zweiten Formmittel in die Offenlage gebracht werden, damit man die Lauffläche entnehmen kann, dadurch gekennzeichnet, daß die ersten und zweiten Formmittel in der Geschlossenlage zueinander unbeweglich sind und um die Achse der Oberflächen eine Rotation ausführen.

7. Vulkanisiervorrichtung für Laufflächen mit einem ersten Formmittel für die sohle der Lauffläche und zweiten Formmittel für das Profil der Lauffläche, sowie mit Heizmitteln, die die Vulkanisation der Lauffläche bewirken, wobei in ihrer geschlossenen Lage die ersten Formmittel zumindest teilweise eine erste quasizylindrische Oberfläche bilden und die zweiten Formmittel zumindest teilweise eine zweite quasizylindrische Oberfläche koaxial und radial außerhalb der ersten Oberfläche bilden, wobei die beiden Formmittel während des Formens und vulkanisierens der Lauffläche zwischen sich eine kreisringförmige kontinuierliche Form mit einer Länge, die kleiner ist als 360°, begrenzen, dadurch gekennzeichnet, daß die ersten und zweiten Formmittel in der Geschlossenlage zueinander unbeweglich sind und eine kontinuierliche Drehbewegung um die Achse der Oberflächen durchführen.

8. Vorrichtung nach Anspruch 7, dadurch gekennzeichnet, daß die ersten Formmittel aus einem Ring bestehen, dessen äußere Oberfläche der inneren Oberfläche der Sohle entspricht und daß die zweiten Formmittel aus Segmenten bestehen, deren radial innere Oberflächen das Profil formen.

9. vorrichtung nach einem der Ansprüche 7 bis 8, dadurch gekennzeichnet, daß sich der Formraum über einen Kreisbogen zwischen 180° und 300° erstreckt.

**Claims** for designated states: DE, GB, IT, NL only (set A)

1. A prevulcanized tread having, in stress-free condition, a constant curvature in its longitudinal direction whose radius corresponds substantially to that of tires to be recapped, the sole of the tread being concave, characterized by the fact that the tread has two ends in its longitudinal direction, and by the fact that the tread automatically inscribes itself between two parallel planes spaced apart by the width of the tread.

2. A tread according to Claim 1 characterized by the fact that the tread is of long length in its longitudinal direction.

3. A tread according to one of the Claims 1 or 2, characterized by the fact that the sole has a curvature in its transverse direction.

4. A tread according to one of the Claims 1 to 3, characterized by the fact that the tread has wings at its side ends.

5. A continuous method of manufacturing prevulcanized treads by molding raw rubber between first molding means for the sole of the tread and second molding means for the tread pattern, said means defining, in closed position, at least in part, the first ones a first quasi-cylindrical surface and the second ones a second coaxial quasi-cylindrical surface located radially outward of the first surface, raw rubber being introduced between the first means and the second means, the first and second means being brought into closed position by moving them together relative to each other in which position the rubber receives a flow of heat for the vulcanization thereof, and the first and second means being brought into open position so that the tread can be removed, characterized by the fact that the first and the second means in closed position are immovable with respect to each other and are imparted a movement of rotation around the axis of said surfaces.

6. An apparatus for manufacturing prevulcanized treads comprising first molding means for the sole of the tread, second molding means for the tread pattern and heating means for vulcanizing the tread, said means defining in closed position at least in part, the first ones a first quasi-cylindrical surface and the second coaxial quasi-cylindrical surface located radially outward of the first surface, the first and second means defining during the molding and vulcanizing of the tread a continuous molding space arranged as a circular arc of less than 360°, characterized by the fact that the first and second means in closed position are immovable with respect to each other and are imparted a movement of rotation around the axis of said surfaces.

7. An apparatus according to Claim 6, characterized by the fact that the first means are formed of a ring which is machined on the outside to the profile of the sole and by the fact that the second means are formed of segments whose radially inner face molds the tread pattern.

8. An apparatus according to one of the Claims 6 to 7, characterized by the fact that the molding space extends over a circular arc of between 180° and 300°.

**Claims** for designated states: AT, BE, CH, FR, LI, LU, SE only (set B)

1. A prevulcanized tread having, in stress-free condition, a constant curvature in its longitudinal direction whose radius corresponds substantially to that of tires to be recapped, the sole of the tread being concave, characterized by the fact that tha tread has two ends in its longitudinal direction.

2. A tread according to Claim 1, characterized by the fact that the tread automatically inscribes itself between two parallel planes spaced apart by the width of the tread.

3. A tread according to Claim 1 or 2 characterized by the fact that the tread is of long length in its longitudinal direction.

4. A tread according to one of the Claim 1 to 3, characterized by the fact that the sole has a curvature in its transverse direction.

5. A tread according to one of the Claims 1 to 3, characterized by the fact that the tread has wings at its side ends.

6. A continuous method of manufacturing prevulcanized treads by molding raw rubber between first molding means for the sole of the tread and second molding means for the tread pattern, said means defining, in closed position at least in part, the first ones a first quasi-cylindrical surface and the second ones a second coaxial quasi-cylindrical surface located radially outward of the first surface, raw rubber being introduced between the first means and the second means, the first and second means being brought into closed position by moving them together relative to each other in which position the rubber receives a flow of heat for the vulcanization thereof, and the first and second means being brought into open position so that the tread can be removed, characterized by the fact that the first and the second means in closed position are immovable with respect to each other and are imparted a movement of rotation around the axis of said surfaces.

7. An apparatus for manufacturing prevulcanized treads comprising first molding means for the sole of the tread, second molding means for the tread pattern and heating means for vulcanizing the tread, said means defining in closed position at least in part, the first ones a first quasi-cylindrical surface and the second coaxial quasi-cylindrical surface located radially outward of the first surface, the first and second means define during the molding and vulcanizing of the tread a continuous molding space arranged as a circular arc of less than 360°, characterized by the fact that the first and second means in closed position are immovable with respect to each other and are imparted a movement of rotation around the axis of said surfaces.

8. An apparatus according to Claim 7, characterized by the fact that the first means are formed of a ring which is machined on the outside to the profile of the sole and by the fact that the second means are formed of segments whose radially inner face molds the tread pattern.

9. An apparatus according to one of the Claims 7 or 8, characterized by the fact that the molding space extends over a circular arc of between 180° and 300°.

Figure 1

Figure 2

Figure 3